# EUROPÄISCHE PATENTSCHRIFT

(11) **EP 2 500 189 B1**
(45) Veröffentlichungstag und Bekanntmachung des Hinweises auf die Patenterteilung: **10.07.2013**
(21) Anmeldenummer: 11002134.2
(22) Anmeldetag: 15.03.2011
(51) Int. Cl.: B60D 1/02, B64F 1/22

(54) **Mechanisch betätigbare Kupplung für ein Fahrzeug zum Schleppen und Schieben**
Mechanically actuated coupling for a vehicle for pulling and pushing
Couplage mécanique pour un véhicule destiné à remorquer et pousser

(43) Veröffentlichungstag der Anmeldung: 19.09.2012
(73) Patentinhaber: Trepel Airport Equipment GmbH, 97941 Tauberbischofsheim (DE)
(72) Erfinder: Diehm, Michael, D-97877 Wertheim (DE); Janik, Veit, D-97950 Grossrinderfeld (DE)
(74) Vertreter: Quermann, Helmut

(56) Entgegenhaltungen:
- FR-A- 1 194 652
- US-A- 2 442 439
- US-A- 3 330 579

## Beschreibung

Die Erfindung betrifft eine mechanisch betätigbare Kupplung für ein Fahrzeug zum Schleppen und Schieben von Flugzeugen, insbesondere Großraumflugzeugen, mit einem Kupplungskörper und einem im Kupplungskörper zwischen einer Kupplungsstellung und einer Nichtkupplungsstellung axial verstellbarem Kupplungsbolzen.

Auf modernen Flughäfen ist es in der Regel notwendig, dass die Flugzeuge sich rückwärts aus ihren Parkpositionen bewegen, da sie mit dem Bug in Richtung eines Gebäudes stehen. Gleiches gilt für Flugzeuge, die sich zu Reparatur- bzw. Wartungsarbeiten in einem Hangar befinden. Für den sogenannten Pushback-Betrieb kommen Fahrzeuge, sogenannte Fahrzeugschlepper in Einsatz, die Flugzeuge im Sinne des Pushback-Betriebes schieben, aber durchaus auch in Vorwärtsfahrtrichtung des Flugzeuges ziehen können. Gezogen werden Flugzeuge beispielsweise, um sie an eine andere Parkposition oder in einen anderen Bereich des Flughafens, dort, wo Reparatur- bzw. Wartungsarbeiten am Flugzeug durchzuführen sind, zu verfahren.

Das Flugzeug zum Schleppen bzw. Schieben mittels einer Schleppstange mit dem Fahrzeug verbunden. Die Schleppstange wird im Bereich eines Endes mit dem Fahrzeug und im Bereich des anderen Endes mit dem Flugzeug verbunden. Hierzu sind Flugzeug und Fahrzeug mit Kupplungen zur Aufnahme der Schleppstange verbunden. Die Kupplung des Flugzeuges befindet sich in aller Regel im Bereich des Fahrwerkes des Bugrades bzw. der Bugräder des Flugzeugs.

Flugzeuge werden in aller Regel mittels eines Fahrzeugs geschleppt bzw. geschoben, das eine mechanisch betätigbare Kupplung zur Aufnahme der Schleppstange aufweist. Diese Kupplung ist gemäß den Merkmalen der eingangs genannten Art ausgebildet. Sie weist einen insbesondere vorne am Fahrzeug in dessen Mitte befindlichen Kupplungskörper auf, der der Aufnahme eines ösenförmigen Endes der Schleppstange dient, wobei ein Kupplungsbolzen zwischen einer die Öse durchsetzenden Kupplungsstellung und einer die Öse freigebende Nichtkupplungsstellung manuell axial verstellbar ist. Die manuelle Verstellung erfolgt durch Ergreifen des Kupplungsbolzens von Hand. Der Kupplungsbolzen ist in aller Regel in einem Kupplungsmaul des Kupplungskörpers gelagert. Dieses Kupplungsmaul weist einen unteren Maulabschnitt und einen oberen Maulabschnitt auf. Der untere Maulabschnitt besitzt eine Öffnung zur Aufnahme des Kupplungsbolzens in der Kupplungsstellung und der obere Maulabschnitt besitzt eine Durchgangsöffnung zur Aufnahme des Kupplungsbolzens in der Kupplungsstellung. Der Kupplungsbolzen ist in den Öffnungen von unterem und oberem Maulabschnitt axial geführt. In der Nichtkupplungsstellung ist der Kupplungsbolzen in aller Regel vollständig aus dem Kupplungskörper herausgezogen, womit er zum Überführen in die Kupplungsstellung in die obere Durchgangsöffnung eingesteckt und von dort weiter nach unten in die untere Öffnung eingeschoben werden muss. Die untere Öffnung kann durchaus auch als Durchgangsöffnung ausgebildet sein. Die axiale Verschiebung des Kupplungsbolzens beim Überführen in die Kupplungsstellung wird durch einen oberen Anschlag am Kupplungsbolzen begrenzt, der bei Erreichen der Kupplungsstellung oben am Kupplungskörper anliegt.

Nachteilig ist bei einer derartigen, mechanisch betätigbaren Kupplung, dass insbesondere dann, wenn das Fahrzeug mit dem Flugzeug gekoppelt ist, somit insbesondere das Fahrzeug mit der Schleppstange gekoppelt ist, Kräfte vom Flugzeug bzw. der Schleppstange auf die Kupplung, konkret den Kupplungsbolzen eingebracht werden, die radial auf den Kupplungsbolzen einwirken und somit ein manuelles Ziehen des Kupplungsbolzens in die Nichtkupplungsstellung aufgrund der Reibung, des Eigengewichtes und eventuellem Verkanten des Kupplungsbolzens kaum möglich ist.

Ein Fahrzeug zum Schleppen und Schieben von Flugzeugen mit einem Startgewicht von mehr als 350 t ist in der EP 2 025 595 A2 beschrieben. Dieses Fahrzeug ist als Flughafen-Feuerlöschfahrzeug ausgebildet. Das Fahrzeug weist frontseitig eine im Fahrzeugrahmen gelagerte Anordnung zur Aufnahme einer Schleppstange auf. Die Anordnung zur Aufnahme der Schleppstange ist aus Stahl gefertigt und besteht aus einem Träger zwischen den Befestigungspunkten am Fahrzeugrahmen, an welchem mittig ein Kupplungsteil zur Aufnahme eines Auges der Schleppstange befestigt ist.

Ein Fahrzeug mit einer mechanisch beträgtigbaren Kupplung zum Schleppen und Schieben von Flugzeugen ist auch aus der Patentschrift FR 1.194.652 bekannt, welche den Oberbegriff des Anspruchs 1 zeigt.

Aufgabe der vorliegenden Erfindung ist es, eine mechanisch betätigbare Kupplung der eingangs genannten Art so weiterzubilden, dass ein manuelles, axiales und komfortables Ziehen des Kupplungsbolzens zu dessen Überführen von der Kupplungsstellung in die Nichtkupplungsstellung gewährleistet ist.

Gelöst wird die Aufgabe bei einer Kupplung der eingangs genannten Art dadurch, dass der Kupplungsbolzen im Bereich eines Endes in einem Lagerteil, senkrecht zur Axialrichtung des Kupplungsbolzens, verschieblich gelagert ist und das Lagerteil, mittels einer manuell betätigbaren Betätigungsvorrichtung, in der Verschieberichtung des Kupplungsbolzens im Lagerteil verstellbar ist, sowie parallel hierzu verstellbar ist.

Bei der erfindungsgemäßen Kupplung wird somit zum Überführen des Kupplungsbolzens von der Kupplungsstellung in die Nichtkupplungsstellung eine Axialkraft in den Kupplungsbolzen mittels des Lagerteils eingeleitet. Dies ist deshalb der Fall, weil der Kupplungsbolzen einerseits senkrecht zu seiner Axialrichtung verschieblich im Lagerteil gelagert ist, und dieses Lagerteil andererseits parallel zur Verschieberichtung des Kupplungsbolzens im Lagerteil verstellbar ist. Es werden somit geringe Kräfte in den Kupplungsbolzen eingeleitet, die von dessen Axialrichtung abweichen und damit zu einem Verkanten des Kupplungsbolzens beim Bewegen von dessen Kupplungsstellung in dessen Nichtkupplungsstellung führen würden.

Abgesehen hiervon gewährleistet diese Lagerung und Führung des Kupplungsbolzens auch ein präzises Verfahren des Kupplungsbolzens von dessen Nicht-kupplungsstellung in dessen Kupplungsstellung. Hierbei ist aber die Gefahr eines Verkantens des Kupplungsbolzens nicht so groß, weil das mit dem Fahrzeug zu koppelnde Flugzeug bzw. Schleppstange keine Kräfte über den Kupplungsbolzen in den Kupplungskörper einleitet.

Vorzugsweise ist der Kupplungskörper als Kupplungsmaul ausgebildet, mit einem unteren Maulabschnitt und einem oberen Maulabschnitt. Der untere Maulabschnitt weist eine Öffnung zur Aufnahme des Kupplungsbolzens in der Kupplungsstellung, bei axialer Führung des eingesteckten Kupplungsbolzens, auf. Der obere Maulabschnitt ist mit einer Durchgangsöffnung zur Aufnahme des Kupplungsbolzens in der Kupplungsstellung und in der Nichtkupplungsstellung, bei axialer Führung des Kupplungsbolzens versehen. Bei der Öffnung des unteren Maulabschnitts kann es sich durchaus auch um eine Durchgangsöffnung handeln.

Vorzugsweise wird der Kupplungsbolzen beim Überführen in seine Nichtkupplungsstellung nur soweit verfahren, dass er nach wie vor den Kupplungskörper, insbesondere die Öffnung im oberen Maulabschnitt durchsetzt. Demzufolge ist auch in der Nichtgebrauchsstellung der Kupplungsbolzen im Bereich des einen Endes im Kupplungskörper geführt und im Bereich des anderen Endes im Lagerteil gelagert.

Vorzugsweise ist die Kupplung so gestaltet, dass der Kupplungsbolzen im Bereich eines oberen Endes in dem Lagerteil gelagert ist. Beim Überführen des Kupplungsbolzens in die Nichtkupplungsstellung wird der Kupplungsbolzen nach oben gezogen.

Baulich besonders einfach ist das Lagerteil gestaltet, wenn es als Stange mit in deren Längsrichtung angeordneter Führung, zur verschiebbaren Lagerung des Kupplungsbolzens ausgebildet ist. Diese Führung ist insbesondere als Langloch ausgebildet.

Bei einer solchen Gestaltung kann die Lagerung des Kupplungsbolzens im Lagerteil besonders einfach dadurch bewerkstelligt werden, dass der Kupplungsbolzen im Bereich seines einen Endes mit einem Lagerbolzen versehen ist, der sich senkrecht zur Axialrichtung des Kupplungsbolzens erstreckt und das Langloch durchsetzt.

Gemäß einer bevorzugten Ausführungsform der Erfindung ist vorgesehen, dass das Lagerteil Bestandteil eines Koppelgetriebes bildet. Insbesondere ist dieses Koppelgetriebe als Viergelenk ausgebildet.

Vorzugsweise weist das Koppelgetriebe zwei, um parallele Achsen schwenkbare Schwingen auf, wobei die beiden Schwingen, in Abstand zu deren Schwenkachsen, schwenkbar das Lagerteil aufnehmen, wobei die Schwenkachsen der beiden Schwingen und des Lagerteils parallel angeordnet sind. Diese Gestaltung stellt sicher, dass das Lagerteil ausschließlich in seiner Längserstreckung, bei überlagerter Parallelverschiebung ortsveränderlich ist.

Insbesondere nehmen die beiden Schwingen, in demselben Abstand zu deren Schwenkachsen, das Lagerteil schwenkbar auf.

Gemäß einer bevorzugten Gestaltung ist die Kupplung, insbesondere das Koppelgetriebe, mittels eines schwenkbar gelagerten Handhebels betätigbar. Insbesondere ist eine der beiden Schwingen mit dem Handhebel verbunden. Diese Schwinge bildet vorzugsweise eine Baueinheit mit dem Handhebel. Hierdurch lässt sich dieser Bereich der Kupplung baulich besonders einfach gestalten.

Es wird als besonders vorteilhaft angesehen, wenn zusätzlich zu der starren, gelenkigen Kopplung beim Koppelgetriebe mittels des von den Lenkern aufgenommenen Lagerteils, derart, dass durch Betätigen des Handhebels über die eine Schwinge eine Kraft in einer ersten Richtung in Längserstreckung des Lagerteils eingeleitet wird, eine weitere Kopplung vorgesehen ist, derart, dass durch Betätigen des Handhebels über die andere Schwinge eine Kraft in derselben Richtung in das Lagerteil eingeleitet wird. Dies bedingt, dass beim Betätigen des Handhebels in der einen Richtung über die dem Handhebel zugeordnete Schwinge eine Schubkraft in das Lagerteil eingeleitet wird und über die andere Schwinge eine Zugkraft in das Lagerteil eingeleitet wird bzw. beim Bewegen des Handhebels in entgegengesetzter Richtung, über die Schwingen entgegengesetzte Kräfte in das Lagerteil eingeleitet werden. Die Zugkraftkomponente führt dazu, dass das Lagerteil keinen erhöhten Knickkräften aus der Einleitung der Betätigungskraft zum Verfahren des Lagerteils unterworfen ist und damit deutlich geringer dimensioniert werden kann unter dem Aspekt, dass nur Schubkräfte in das Lagerteil eingeleitet würden.

Unter diesem Aspekt wird es als besonders vorteilhaft angesehen, wenn die andere der beiden Schwingen Bestandteil eines Übertragungselements bildet, wobei das Übertragungselement mindestens zwei Schenkel oder zwei Schenkel und einen diesen verbindenden Steg aufweist, wobei der eine Schenkel die andere Schwinge bildet und der andere Schenkel im Bereich seines dem Lagerteil abgewandten Endes schwenkbar mit einer die weitere Kopplung bildenden Verbindungsstange verbunden ist, die schwenkbar mit dem Handhebel in Abstand zu dessen Schwenkachse verbunden ist. Durch diese Gestaltung kann auf baulich besonders einfache Art und Weise die genannte Zugkraftkomponente in das Lagerteil eingeleitet werden.

Die genannte Funktion lässt sich baulich besonders einfach darstellen, wenn das Übertragungselement die Form eines U aufweist, insbesondere eines U, dessen Schenkel gleich lang sind.

Baulich besonders kompakt und funktionell besonders einfach lässt sich die Kupplung darstellen, wenn im Kupplungskörper ein Ständer gelagert ist, in dem um eine horizontale Achse die eine Schwinge, die eine Baueinheit mit dem Handhebel bildet, schwenkbar gelagert ist, sowie im Ständer das Übertragungselement schwenkbar gelagert ist.

Bei der Gestaltung der Kupplung mit einem Koppelgetriebe wird es als vorteilhaft angesehen, wenn in der Kupplungsstellung des Kupplungsbolzens die Lagerachsen der jeweiligen Schwinge im Wesentlichen in vertikaler Flucht angeordnet sind, insbesondere bei unten angeordnetem Lagerteil. Vorzugsweise sind in der Nicht-Kupplungsstellung des Kupplungsbolzens die Lagerachsen der jeweiligen Schwinge im Wesentlichen in vertikaler Flucht angeordnet, insbesondere bei oben angeordnetem Lagerteil.

In der Nichtkupplungsstellung und/oder der Kupplungsstellung des Kupplungsbolzens ist insbesondere vorgesehen, dass die Betätigungsvorrichtung sich in einer Über-Totpunkt-Stellung befindet, bei Anlage an einem Begrenzungsanschlag, insbesondere einem Begrenzungsanschlag für den Handhebel. Hierbei ist diese Ausbildung für die Nichtkupplungsstellung von besonderer Bedeutung, weil vorzugsweise der Kupplungsbolzen nach oben in seine Nichtkupplungsstellung bewegt wird und durch die Über-Totpunkt-Stellung verhindert wird, dass der Kupplungsbolzen unter seinem Gewicht ungewollt in seine Kupplungsstellung verfährt.

Die erfindungsgemäße Gestaltung der mechanisch betätigbaren Kupplung erlaubt somit, insbesondere unter dem Aspekt deren Weiterbildungen, ein kräfte-übersetztes Verschieben des Kupplungsbolzens im Kupplungskörper, womit insbesondere dann, wenn unter Einwirkung des mit der Kupplung zu koppelnden Elements, insbesondere der Schleppstange, selbst bei auf den Kupplungsbolzen einwirkenden Radialkräften ein problemloses Überführen des Kupplungsbolzens in die Nichtkupplungsstellung, somit Ziehen des Kupplungsbolzens in die Nichtkupplungsstellung möglich ist.

Die Kupplung ermöglicht es, Schleppstangen sicher zu kuppeln und durch Überführen des Kupplungsbolzens in die Nichtkupplungsstellung zu lösen, wobei die Kupplung für Flugzeuge mit einem Startgewicht bis zu 600 t vorgesehen ist.

Das mit der Kupplung ausgestaltete Fahrzeug ist beispielsweise bis zu 70 t schwer.

Die erfindungsgemäße Kupplung erlaubt es, den Kupplungsbolzen mit geringem Kraftaufwand in die Nichtkupplungsstellung zu ziehen. Da der Kupplungsbolzen dauerhaft im Lagerteil gelagert ist, muss er in der Nichtkupplungsstellung nicht zwischengelagert werden, beispielsweise auf den Boden des Flughafenvorfeldes oder dergleichen abgelegt werden. Der im Bereich der Kupplung Arbeitende kann die Kupplung mit einer Hand betätigen, sodass die andere Hand das mit der Kupplung zu koppelnde Bauteil, insbesondere die Schleppstange ergreifen kann und im Sinne eines Lösens der Schleppstange von der Kupplung bzw. Verbindens der Schleppstange mit der Kupplung handhaben kann.

Weitere Merkmale der Erfindung sind in der Beschreibung und der Zeichnung der Figuren dargestellt, wobei bemerkt wird, dass alle Einzelmerkmale und alle Kombinationen von Einzelmerkmalen erfindungswesentlich sind.

In der Zeichnung ist die Erfindung anhand eines Ausführungsbeispiels dargestellt, ohne hierauf beschränkt zu sein.

Es zeigt:
- Fig. 1: eine räumliche Darstellung der mechanisch betätigbaren Kupplung eines Fahrzeuges zum Schleppen und Schieben von Flugzeugen, insbesondere Großraumflugzeugen, von Gepäck- und Frachtanhängern und dergleichen, veran-schaulicht in der Kupplungsstellung,
- Fig. 2: eine Seitenansicht der in Fig. 1 gezeigten Kupplung,
- Fig. 3: eine Draufsicht der in Fig. 1 gezeigten Kupplung,
- Fig. 4 bis 6: Ansichten entsprechend der Fig. 1 bis 3 der Kupplung, ver-anschaulicht für eine geringfügig aus der Kupplungsstellung bewegte Stellung des Kupplungsbolzens der Kupplung,
- Fig. 7 bis 9: Ansichten entsprechend der Fig. 1 bis 3 bzw. Fig. 4 bis 6 der Kupplung, veranschaulicht für eine weiter aus der Kupp-lungsstellung bewegte Stellung des Kupplungsbolzens der Kupplung,
- Fig. 10 bis 12: Ansichten entsprechend der Fig. 1 bis 3 der Kupplung, ver-anschaulicht für die Nichtkupplungsstellung,
- Fig. 13: eine räumliche Ansicht der Anordnung gemäß Fig. 1, ohne veranschaulichten Kupplungskörper,
- Fig. 14 bis 16: die Anordnung gemäß Fig. 13 in einer Seitenansicht, einer Draufsicht und einer Stirnansicht.

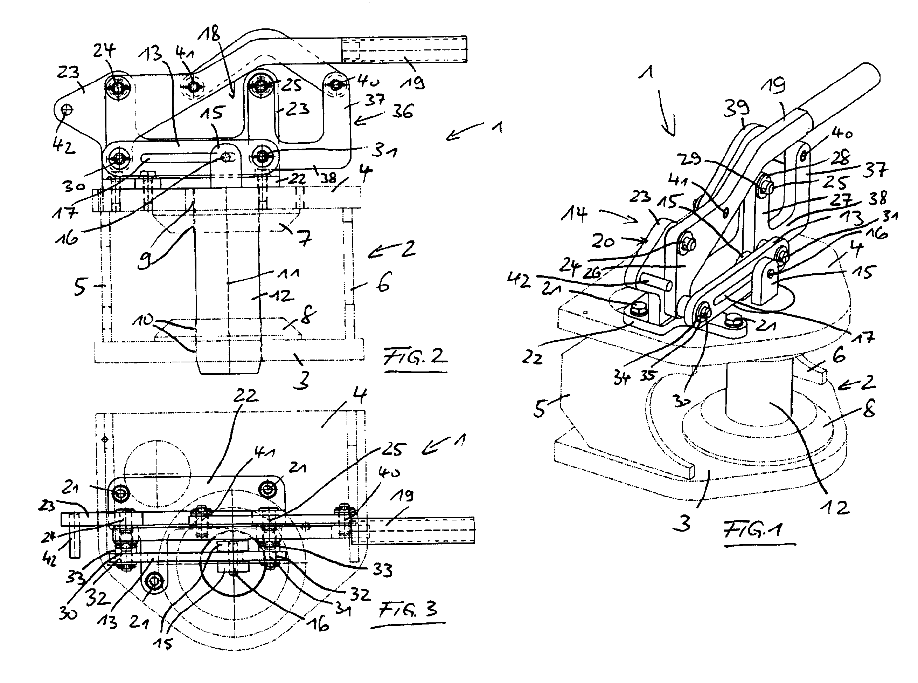

Veranschaulicht ist in den Fig. 1 bis 12 die erfindungsgemäße, mechanisch betätigbare Kupplung 1. Diese weist einen Kupplungskörper 2 auf, der als Kupplungsmaul ausgebildet ist. Der Kupplungskörper 2 ist mit dem Fahrzeugrahmen des Fahrzeugs verbunden oder bildet Bestandteil des Fahrzeugrahmens. Dieses Fahrzeug dient dem Schleppen und Schieben von Flugzeugen, insbesondere Großraumflugzeugen mit einem Startgewicht bis zu 600 t, wobei das Fahrzeug durchaus 70 t schwer sein kann.

Das Kupplungsmaul 2 weist einen plattenförmigen unteren Maulabschnitt 3 und einen parallel hierzu angeordneten plattenförmigen, oberen Maulabschnitt 4 auf. Im Bereich beider Seiten des Kupplungsmauls 2 verbinden Seitenplatten 5 und 6 die beiden Maulabschnitte 3 und 4. Die beiden Maulabschnitte 3 und 4 sind auf deren zugewandten Seiten, zwecks Verstärkung und als Einführhilfe, mit Ringflanschen 7 und 8 versehen, die mit dem zugeordneten Maulabschnitt 3 bzw. 4 verschweißt sind. Der obere Maulabschnitt 3 und der dazugehörige Ringflansch 7 sind mit fluchtenden Durchgangslöchern 9 versehen, entsprechend sind der untere Maulabschnitt 3 und der diesem zugeordnete Ringflansch 8 mit fluchtenden Durchgangslöchern 10 versehen. Die Durchgangslöcher 9 und 10 sind rotationssymmetrisch zur vertikal orientierten Achse 11 angeordnet und weisen dieselben Durchmesser auf. Der Durchmesser beträgt beispielsweise 75 mm, sodass ein Kupplungsbolzen 12 in Richtung der Achse 11 mit geringem Spiel, aber freigängig, in die Durchgangslöcher 9 und 10 eingesteckt werden kann. In der in den Fig. 1 bis 3 veranschaulichten Kupplungsstellung des Kupplungsbolzens 12 schließt dieser mit seinem oberen Ende im Wesentlichen bündig mit der oberen Fläche des oberen Maulabschnitts 4 ab und ragt mit seinem unteren Ende unten über die untere Begrenzungsfläche des unteren Maulabschnitts 3 geringfügig hinaus.

Das untere Ende des Kupplungsbolzens 12 läuft geringfügig konisch zu, und ist somit als Kegelstumpf ausgebildet.

Der Kupplungsbolzen 12 ist im Bereich seines oberen Endes in einem Lagerteil 13, senkrecht zur durch die Achse 11 wiedergegebenen Axialrichtung des Kupplungsbolzens 12 verschieblich gelagert und es ist das Lagerteil 13 mittels einer manuell betätigbaren Betätigungsvorrichtung 14 in der Verschieberichtung des Kupplungsbolzens 12 im Lagerteil 13 verstellbar, sowie parallel hierzu verstellbar.

Unter diesem Aspekt weist der Kupplungsbolzen 12 im Bereich seines oberen Endes zwei parallel zueinander angeordnete Ansätze 15 auf, in denen ein Lagerbolzen 16 gelagert ist. Dieser erstreckt sich senkrecht zur Axialrichtung des Kupplungsbolzens 12 und durchsetzt ein Langloch 17 im Lagerteil 13. Das Lagerteil 13 ist als Stange mit in dessen Längsrichtung angeordnetem Langloch gestaltet, wobei dieses Langloch 17 als Führung zur verschiebbaren Lagerung des Lagerbolzens 16 und damit des Kupplungsbolzens 12 dient.

Das Lagerteil 13 bildet Bestandteil eines Koppelgetriebes 18, das als Viergelenk ausgebildet ist. Das Koppelgetriebe 18 ist mittels eines Handhebels 19 betätigbar.

Ein Ständer 20 weist einen plattenförmigen Bodenbereich 22 und einen senkrecht zu diesem orientierten plattenförmigen Lagerbereich 23 auf. Der Bodenbereich 22 liegt mit seiner Unterseite oben auf dem oberen Maulabschnitt 4 auf und ist mittels Schrauben 21 mit diesem verbunden. Der Lagerbereich 23 erstreckt sich vom Bodenbereich 22 aus nach oben. Im Bereich des oberen Endes des Lagerbereichs 23 nimmt dieser, in horizontalem Abstand zueinander und in demselben Abstand zum oberen Maulabschnitt 4, horizontal angeordnete Lagerbolzen 24 und 25 auf. Im Lagerbolzen 24 ist eine Schwinge 26 gelagert, die in der Kupplungsstellung des Kupplungsbolzens 12, ausgehend vom Lagerbolzen 24, nach unten gerichtet ist und eine Baueinheit mit dem etwa im rechten Winkel zur Schwinge 26 angeordneten Handhebel 19 bildet. In dem anderen Lagerbolzen 25 ist eine Schwinge 27 gelagert, die dieselbe Länge aufweist wie die Schwinge 26 und in der Kupplungsstellung des Kupplungsbolzens 12 parallel zur Schwinge 26 angeordnet ist und gleichfalls, ausgehend vom Lagerbolzen 25, nach unten gerichtet ist. Unterlegscheiben 28 und Splinte 29 sichern die Schwingen 26 und 27 axial. Im Bereich des unteren Endes der Schwinge 26 ist ein Lagerbolzen 30 und im Bereich des unteren Endes der Schwinge 27 ein Lagerbolzen 31 gelagert. Die horizontal angeordneten Lagerbolzen 30 und 31 durchsetzen Durchgangslöcher 32, die im Bereich abgewandter Enden des Lagerteils 13 angeordnet sind. Zur exakten parallelen Positionierung des Lagerteils 3 bezüglich dem Lagerbereich 23 sind Distanzhülsen 33 vorgesehen, die am Lagerteil 13 und am Lagerbereich 23 anliegen und die Lagerbolzen 30 und 31 durchsetzen. Axial festgelegt ist das Lagerteil 13 mittels Unterlegscheiben 34 und Splinten 35, die im Bereich der freien Enden der Lagerbolzen 30 und 31 angeordnet sind.

Das Lagerteil 13 ist im Bereich zwischen den Durchgangslöchern 32 mit dem Langloch 17 versehen.

Das Koppelgetriebe 18 weist somit die beiden, um parallele Achsen schwenkbaren Schwingen 26 und 27 auf, die in demselben Abstand zu deren Schwenkachsen schwenkbar das Lagerteil 13 aufnehmen, wobei die Schwenkachsen der beiden Schwingen 26, 27 und des Lagerteils 13 parallel angeordnet sind.

Die Schwinge 27 bildet Bestandteil eines Übertragungselements 36. Dieses ist U-förmig ausgebildet und weist die Schwinge 27, einen Schenkel 37 und einen dem Schenkel 37 und die Schwinge 27 verbindenden Steg 38 auf. Die Länge des Schenkels 37 entspricht hierbei der Länge der Schwinge 27. Im Bereich seines oberen Endes nimmt der Schenkel 27 um eine horizontale Achse, die parallel zum Lagerbolzen 25 angeordnet ist, eine Verbindungsstange 39 schwenkbar auf. Diese ist unter einem stumpfen Winkel abgewinkelt und erstreckt sich mit ihrer Abwinklung nach oben gerichtet. Die Verbindungsstange 39 ist als Platte ausgebildet. Im Bereich des einen Endes ist die Verbindungsstange 39 mittels eines Lagerbolzens 40 im Bereich des oberen Endes des Schenkels 37 in diesem gelagert und im Bereich des anderen Endes mittels eines Lagerbolzens 41 im Handhebel 19 schwenkbar gelagert, und zwar in Abstand zu dessen Schwenkachse im Bereich des Lagerbolzens 24. Die Lagerbolzen 40 und 41 sowie der Lagerbolzen 24 sind hierbei parallel und damit horizontal angeordnet.

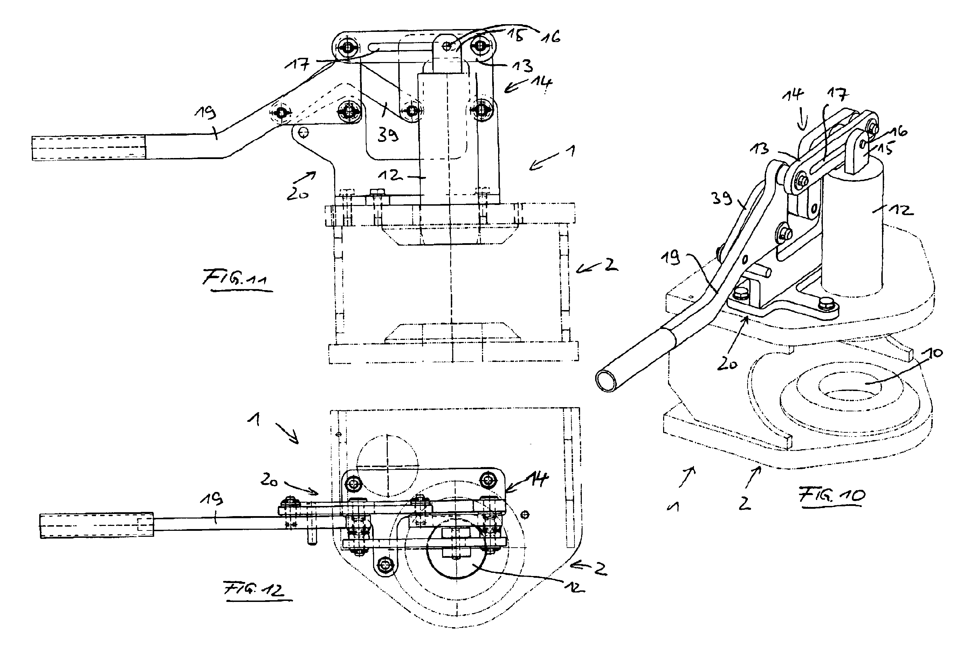

Bezogen auf die in den Fig. 1 bis 3 veranschaulichte Kupplungsstellung des Kupplungsbolzens 12 sind somit die Lagerachsen der jeweiligen Schwinge 26 bzw. 27, somit bezüglich der Schwinge 26 die Lagerbolzen 24 und 30 sowie bezüglich der Schwinge 27 die Lagerbolzen 25 und 31 im Wesentlichen in vertikaler Flucht angeordnet. Dies gilt auch für die in den Fig. 10 bis 12 veranschaulichte Nichtgebrauchsstellung des Kupplungsbolzens 12.

Von Vorteil ist es, wenn sich sowohl in der Kupplungsstellung als auch in der Nichtkupplungsstellung des Kupplungsbolzens 12 die Betätigungsvorrichtung 14 in einer Über-Totpunkt-Stellung befindet, bei Anlage an einem Begrenzungsanschlag. Dieser ist in dem Ständer 20, bezogen auf die Kupplungsstellung des Kupplungsbolzens 12 auf der dem Lagerbolzen 21 abgewandten Seite des Lagerbolzens 24 angeordnet und im Lagerbereich 23 des Ständers 20 angeordnet. Der Begrenzungsanschlag 42 ist als Stift ausgebildet, der parallel zum Lagerbolzen 24 positioniert ist.

Nachfolgend wird unter Bezugnahme auf die Darstellung der Fig. 1 bis 12 die Wirkungsweise der erfindungsgemäßen, mechanisch betätigbaren Kupplung beschrieben:
Die Fig. 1 bis 3 veranschaulichen die Kupplungsstellung. Bei mit der Kupplung 1 gekoppeltem Element, insbesondere gekoppelter Schleppstange, ist diese im Bereich des einen Endes mit der dort befindlichen Kupplungsöse in das Kupplungsmaul 2 eingesteckt und es durchsetzt der Kupplungsbolzen 12 das vertikal orientierte Durchgangsloch in der Kupplungsöse. Die in Axialrichtung konisch zulaufenden Ringflansche 7 und 8 bewirken die vertikal zentrierte Einführung der Kupplungsöse.

In der Kupplungsstellung des Kupplungsbolzens 12 befindet sich der Handhebel 19 in seiner im Wesentlichen horizontal orientierten Ausgangsstellung. Über die Kinematik der Betätigungsvorrichtung 14 nimmt das Lagerteil 13 eine Position benachbart der oberen Begrenzung des oberen Maulabschnitts 4 ein und es liegt in einer Über-Totpunkt-Stellung das Lagerteil 13 am oberen Maulabschnitt 4 an. Der Kupplungsbolzen 12 ist derart bezüglich des Lagerteils 13 positioniert, dass der Lagerbolzen 16 das Langloch 17 im Bereich desjenigen Endes durchsetzt, das der Schwinge 27 benachbart ist.

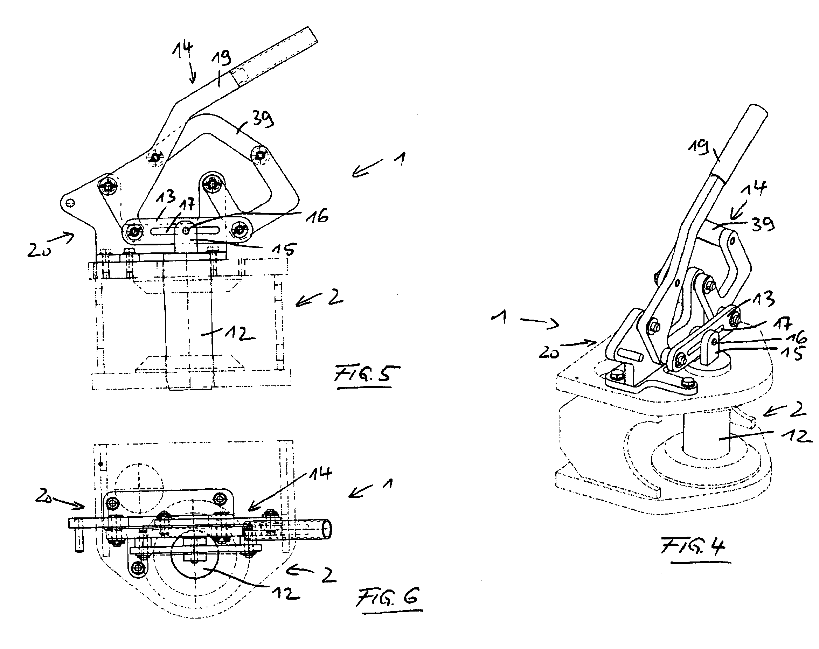

Wird der Handhebel 19 entgegengesetzt dem Uhrzeigersinn um die durch den Lagerbolzen 24 vorgegebene Achse geschwenkt, führt dies zu einer Bewegung des Lagerteils 13, bezogen auf die Orientierung nach Fig. 1, nach rechts, und zwar horizontal, bei gleichzeitigem Parallelverfahren des Lagerteils 13 bezüglich der oberen Begrenzung des oberen Maulabschnitts 4, sodass der Lagerbolzen 16 des Kupplungsbolzens 12 nach links im Langloch 17 verfahren wird und hierbei gleichzeitig der Kupplungsbolzen 12 angehoben wird. Dies ist für die erste Zwischenstellung, in der der Kupplungsbolzen 12 geringfügig angehoben ist und noch in den Ringflansch 8 eingesetzt ist, in den Fig. 4 bis 6 veranschaulicht.

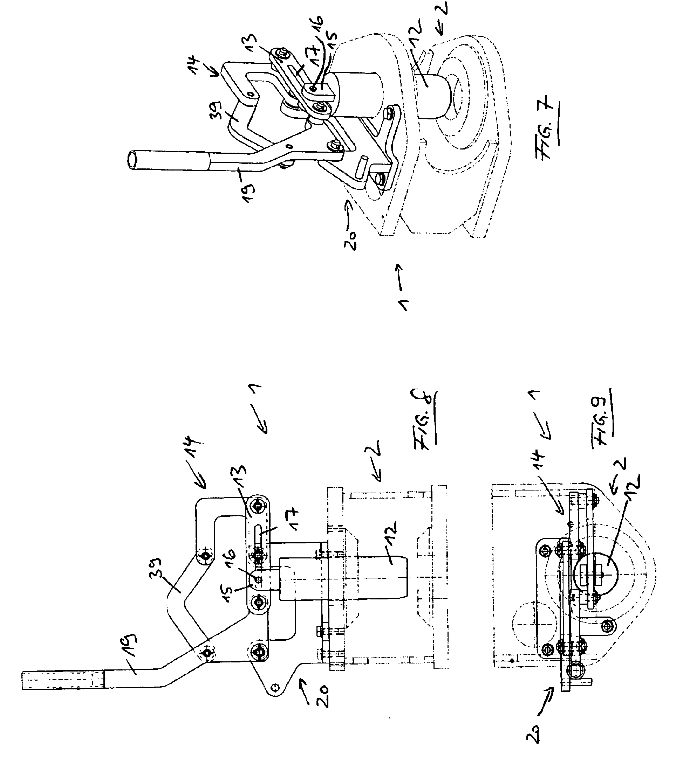

Wird der Handhebel 19 weiter entgegen dem Uhrzeigersinn verschwenkt, führt dies dazu, dass das Lagerteil 13 weiter parallel angehoben wird und der Lagerbolzen 16 weiter in Richtung des linken Endes des Langlochs 17 verfahren wird. Demzufolge wird der Kupplungsbolzen 12 weiter angehoben. In den Fig. 7 bis 9 ist eine Zwischenstellung veranschaulicht, in der der Kupplungsbolzen 12 bereits nicht mehr in Kontakt mit dem Ringflansch 8 und dem unteren Maulabschnitt 3 ist.

Insbesondere diesen Figuren ist anschaulich zu entnehmen, dass ein Betätigen des Handhebels 19 über die diesem zugeordnete Schwinge 26 eine Schubkraft in das Lagerteil 13 eingeleitet wird, während über den Handhebel 19, die Verbindungsstange 39, das Übertragungselement 36, konkret den Schenkel 37 und den Steg 38 eine Zugkraft die andere Schwinge 27 und damit über diese Schwinge 27 eine Zugkraft in das Lagerteil 13 eingeleitet wird.

Die Fig. 10 bis 12 veranschaulichen die erfindungsgemäße Kupplung 1 in der Nichtkupplungsstellung des Kupplungsbolzens 12. Hierbei ist der Handhebel 19 so weit entgegen dem Uhrzeigersinn bewegt worden, dass er im Wesentlichen horizontal orientiert ist und sich die Lagerbolzen 30 und 31 des Lagerteils 13 oberhalb der Lagerbolzen 24 und 25 in einer Über-Totpunkt-Stellung befinden, bei Anlage des Handhebels 19 am Begrenzungsanschlag 42. Beim Überführen des Handhebels 19 in die Stellung gemäß der Fig. 10 bis 12 wird das Lagerteil 13 weiter parallel und in Längsrichtung überlagert verschoben, wobei der Lagerbolzen 16 wieder nach rechts im Langloch 17 des Lagerteils 13 zurückwandert. In dieser Nichtkupplungsstellung ist aufgrund der Über-Totpunkt-Lage der Kupplungsbolzen 12 gehalten, ohne dass somit der Handhebel 19 festgehalten werden muss.

Zum Überführen des Kupplungsbolzens 12 von der Nichtkupplungsstellung in die Kupplungsstellung ist der Bewegungsablauf umgekehrt dem beschriebenen zu vollziehen, somit ausgehend von dem Zustand gemäß der Fig. 10 bis 12 zum Zustand der Fig. 1 bis 3.

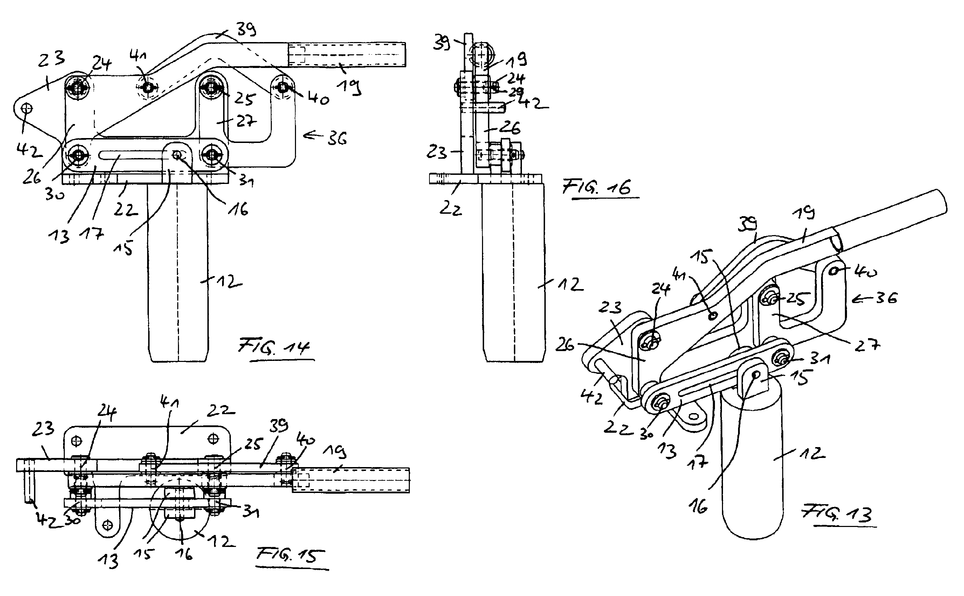

In den Fig. 13 bis 16 ist die Kupplung ohne Kupplungskörper 2 veranschaulicht.

Es wird somit eine mechanisch betätigbare Kupplung vorgeschlagen, bei der Kupplungsbolzen 12 immer geradlinig bewegt wird. Dies ist insbesondere beim Ziehen des Kupplungsbolzens 12 zu dessen Überführen in die Nichtkupplungsstellung von Vorteil. Die den Kupplungsbolzen 12 hebende Kraft ist immer senkrecht. Auch die beim Überführen des Kupplungsbolzens in die Kupplungsstellung auf den Kupplungsbolzen 12 einwirkende Kraft ist immer senkrecht.

Selbst bei leichter Verspannung des Kupplungsbolzens 12 im Kupplungsmaul 2 kann dieser immer sicher gezogen werden, aufgrund des Verwendung findenden ungleichförmig übersetzten Getriebes.

## Patentansprüche

1. Mechanisch betätigbare Kupplung (1) für ein Fahrzeug zum Schleppen und Schieben von Flugzeugen, insbesondere Großraumflugzeugen, mit einem Kupplungskörper (2) und einem im Kupplungskörper (2) zwischen einer Kupplungsstellung und einer Nichtkupplungsstellung axial verstellbaren Kupplungsbolzen (12), **dadurch gekennzeichnet, dass** der Kupplungsbolzen (12) im Bereich eines Endes in einem Lagerteil (13), senkrecht zur Axialrichtung des Kupplungsbolzens (12) verschieblich gelagert ist und das Lagerteil, mittels einer manuell betätigbaren Betätigungsvor-richtung (14), in der oben genannten Verschieberichtung des Kupplungsbolzens (12) im Lagerteil (13) verstellbar ist, sowie parallel hierzu verstellbar ist.

2. Kupplung nach Anspruch 1, **dadurch gekennzeichnet, dass** der Kupplungsbolzen (12) im Bereich eines oberen Endes in dem Lagerteil (13) gelagert ist.

3. Kupplung nach Anspruch 1 oder 2, **dadurch gekennzeichnet, dass** das Lagerteil (13) als Stange mit in deren Längsrichtung angeordneter Führung, insbesondere als Langloch (17) ausgebildeter Führung, zur verschiebbaren Lagerung des Kupplungsbolzens (12) ausgebildet ist.

4. Kupplung nach Anspruch 3, **dadurch gekennzeichnet, dass** der Kupplungsbolzen (12) im Bereich des einen Endes mit einem Lagerbolzen (16) verbunden ist, der sich senkrecht zur Axialrichtung des Kupplungsbolzens (12) erstreckt und das Langloch (17) durchsetzt.

5. Kupplung nach einem der Ansprüche 1 bis 4, **dadurch gekennzeichnet, dass** das Lagerteil (13) Bestandteil eines Koppelgetriebes (18) bildet, das insbesondere mittels eines schwenkbar gelagerten Handhebels (19) betätigbar ist.

6. Kupplung nach Anspruch 5, **dadurch gekennzeichnet, dass** das Koppelgetriebe (18) zwei, um parallele Achsen (24, 25) schwenkbare Schwingen (26, 27) aufweist, wobei die beiden Schwingen (26, 27), im Abstand zu deren Schwenkachsen (24, 25), schwenkbar das Lagerteil (13) aufnehmen, wobei die Schwenkachsen (24, 25, 30, 31) der beiden Schwingen (26, 27) und des Lagerteils (13) parallel angeordnet sind.

7. Kupplung nach Anspruch 6, **dadurch gekennzeichnet, dass** eine (26) der beiden Schwingen (26, 27) mit dem Handhebel (19) verbunden ist, insbesondere eine Baueinheit mit dem Handhebel (19) bildet.

8. Kupplung nach einem der Ansprüche 6 bis 7, **dadurch gekennzeichnet, dass** zusätzlich zu der gelenkigen Kopplung beim Koppelgetriebe (18) mittels des von den Schwingen (26, 27) aufgenommenen Lagerteils (13), derart, dass durch Betätigen des Handhebels (19) über die eine Schwinge (26) eine Kraft in einer ersten Richtung in Längserstreckung des Lagerteils (13) eingeleitet wird, eine weitere gelenkige Kopplung vorgesehen ist, derart, dass durch Betätigen des Handhebels (19) über die andere Schwinge (27) eine Kraft in derselben ersten Richtung in das Lagerteil (13) eingeleitet wird.

9. Kupplung nach Anspruch 8, **dadurch gekennzeichnet, dass** die andere (27) der beiden Schwingen (26, 27) Bestandteil eines Übertragungselements (36) bildet, wobei das Übertragungselement (36) mindestens zwei Schenkel oder zwei Schenkel (27, 37) und einen diesen verbindenden Steg (38) aufweist, wobei der eine Schenkel die andere Schwinge (27) bildet und der andere Schenkel (37) im Bereich seines dem Lagerteil (13) abgewandten Endes schwenkbar mit einer die weitere Kopplung bildenden Verbindungsstange (39) verbunden ist, die schwenkbar mit dem Handhebel (19) in Abstand zu dessen Schwenkachse (24) verbunden ist.

10. Kupplung nach Anspruch 9, **dadurch gekennzeichnet, dass** das Übertragungselement (36) die Form eines U aufweist.

11. Kupplung nach Anspruch 9 oder 10, **dadurch gekennzeichnet, dass** im Kupplungskörper (2) ein Ständer (20) gelagert ist, in dem, um eine horizontale Achse (24) die eine Schwinge (26), die eine Baueinheit mit dem Handhebel (19) bildet, schwenkbar gelagert ist, sowie im Ständer (20) das Übertragungselement (36) schwenkbar gelagert ist.

12. Kupplung nach einem der Ansprüche 6 bis 11, **dadurch gekennzeichnet, dass** in der Kupplungsstellung des Kupplungsbolzens (12) die Lagerachsen (24, 30; 25, 31) der jeweiligen Schwinge (26; 27) im Wesentlichen in vertikaler Flucht angeordnet sind, insbesondere bei unten angeordnetem Lagerteil (13).

13. Kupplung nach einem der Ansprüche 6 bis 12, **dadurch gekennzeichnet, dass** in der Nichtkupplungsstellung des Kupplungsbolzens (12) die Lagerachsen (24, 30; 25, 31) der jeweiligen Schwinge (26; 27) im Wesentlichen in vertikaler Flucht angeordnet sind, insbesondere bei oben angeordneten Lagerteil (13).

14. Kupplung nach einem der Ansprüche 1 bis 13, **dadurch gekennzeichnet, dass** sich in der Nichtkupplungsstellung und/oder der Kupplungsstellung des Kupplungsbolzens (12) die Betätigungsvorrichtung (14) in einer Über-Totpunkt-Stellung befindet, bei Anlage an einem Begrenzungsanschlag, insbesondere einem Begrenzungsanschlag (42) für den Handhebel (19).

15. Kupplung nach einem der Ansprüche 1 bis 14, **dadurch gekennzeichnet, dass** der Kupplungskörper (2) als Kupplungsmaul ausgebildet ist, mit einem unteren Maulabschnitt (3), der eine Öffnung (10) zur Aufnahme des Kupplungsbolzens (12) in der Kupplungsstellung, bei axialer Führung des eingesteckten Kupplungsbolzens (12), aufweist, und mit einem oberen Maulabschnitt (4), der eine Durchgangsöffnung (9) zur Aufnahme des Kupplungsbolzens (12) in der Kupplungsstellung und der Nichtkupplungsstellung, bei axialer Führung des Kupplungsbolzens (12), aufweist.

## Claims

1. Mechanically actuable coupling (1) for a vehicle for pulling and pushing aircraft, in particular wide-bodied aircraft, having a coupling body (2) and a coupling pin (12) which can be adjusted axially in the coupling body (2) between a coupling position and a non-coupling position, **characterized in that**, in the region of one end, the coupling pin (12) is mounted in a bearing part (13) such that it can be displaced perpendicularly with respect to the axial direction of the coupling pin (12), and, by means of a manually actuable actuating apparatus (14), the bearing part can be adjusted in the abovementioned displacement direction of the coupling pin (12) in the bearing part (13) and can be adjusted parallel hereto.

2. Coupling according to Claim 1, **characterized in that**, in the region of an upper end, the coupling pin (12) is mounted in the bearing part (13).

3. Coupling according to Claim 1 or 2, **characterized in that** the bearing part (13) is configured as a rod with a guide which is arranged in the longitudinal direction of the said rod, in particular a guide which is configured as a slot (17), for the displaceable mounting of the coupling pin (12).

4. Coupling according to Claim 3, **characterized in that**, in the region of one end, the coupling pin (12) is connected to a bearing pin (16) which extends perpendicularly with respect to the axial direction of the coupling pin (12) and penetrates the slot (17).

5. Coupling according to one of Claims 1 to 4, **characterized in that** the bearing part (13) forms a constituent part of a coupler mechanism (18) which can be actuated, in particular, by means of a pivotably mounted hand lever (19).

6. Coupling according to Claim 5, **characterized in that** the coupler mechanism (18) has two rockers (26, 27) which can be pivoted about parallel axes (24, 25), the two rockers (26, 27) receiving the bearing part (13) pivotably, at a spacing from their pivot axes (24, 25), the pivot axes (24, 25, 30, 31) of the two rockers (26, 27) and of the bearing part (13) being arranged in parallel.

7. Coupling according to Claim 6, **characterized in that** one (26) of the two rockers (26, 27) is connected to the hand lever (19), in particular forms a structural unit with the hand lever (19).

8. Coupling according to either of Claims 6 and 7, **characterized in that**, in addition to the articulated coupling in the case of the coupler mechanism (18) by means of the bearing part (13) which is received by the rockers (26, 27), in such a way that a force is introduced in a first direction in the longitudinal extent of the bearing part (13) via one rocker (26) by actuation of the hand lever (19), a further articulated coupling is provided in such a way that a force is introduced in the same first direction into the bearing part (13) via the other rocker (27) by actuation of the hand lever (19).

9. Coupling according to Claim 8, **characterized in that** the other (27) of the two rockers (26, 27) forms a constituent part of a transmission element (36), the transmission element (36) having at least two limbs or two limbs (27, 37) and a web (38) which connects them, one limb forming the other rocker (27) and the other limb (37) being connected pivotably, in the region of its end which faces away from the bearing part (13), to a connecting rod (39) which forms the further coupling and is connected pivotably to the hand lever (19) at a spacing from the pivot axis (24) of the latter.

10. Coupling according to Claim 9, **characterized in that** the transmission element (36) has a U-shape.

11. Coupling according to Claim 9 or 10, **characterized in that** a supporting stand (20) is mounted in the coupling body (2), in which supporting stand (20) the one rocker (26) which forms a structural unit with the hand lever (19) is mounted such that it can be pivoted about a horizontal axis (24), and the transmission element (36) is mounted pivotably in the supporting stand (20).

12. Coupling according to one of Claims 6 to 11, **characterized in that**, in the coupling position of the coupling pin (12), the bearing axes (24, 30; 25, 31) of the respective rocker (26; 27) are arranged substantially in vertical alignment, in particular with the bearing part (13) being arranged at the bottom.

13. Coupling according to one of Claims 6 to 12, **characterized in that**, in the non-coupling position of the coupling pin (12), the bearing axes (24, 30; 25, 31) of the respective rocker (26; 27) are arranged substantially in vertical alignment, in particular with the bearing part (13) being arranged at the top.

14. Coupling according to one of Claims 1 to 13, **characterized in that**, in the non-coupling position and/or the coupling position of the coupling pin (12), the actuating apparatus (14) is situated in a position beyond the dead centre, in the case of contact with a limit stop, in particular a limit stop (42) for the hand lever (19).

15. Coupling according to one of Claims 1 to 14, **characterized in that** the coupling body (2) is configured as a coupling mouth, having a lower mouth section (3) which has an opening (10) for receiving the coupling pin (12) in the coupling position, with axial guidance of the plugged-in coupling pin (12), and having an upper mouth section (4) which has a through opening (9) for receiving the coupling pin (12) in the coupling position and the non-coupling position, with axial guidance of the coupling pin (12).

## Revendications

1. Embrayage mécanique (1) pour un véhicule destiné à remorquer et pousser des avions, notamment des avions gros-porteurs, avec un corps d'embrayage (2) et un goujon d'embrayage (12) pouvant être déplacé dans le plan axial dans le corps d'embrayage (2) entre une position d'embrayage et une position de non-embrayage, **caractérisé en ce que** le goujon d'embrayage (12) est disposé de façon coulissante dans la zone d'une extrémité prévue dans une partie de palier de roulement (13), perpendiculairement à la direction axiale du goujon d'embrayage (12) et la partie de palier de roulement, à l'aide d'un dispositif d'actionnement (14) pouvant être actionné manuellement, dans lequel ladite direction de coulissement susmentionnée du goujon d'embrayage (12) peut être déplacée dans la partie de palier de roulement (13), ainsi que parallèlement à elle.

2. Embrayage selon la revendication 1, **caractérisé en ce que** le goujon d'embrayage (12) est disposé dans la zone d'une extrémité supérieure prévue dans la partie de palier de roulement (13).

3. Embrayage selon la revendication 1 ou 2, **caractérisé en ce que** la partie de palier de roulement (13) prend la forme d'une barre dotée d'un guide disposé dans sa direction longitudinale, notamment sous la forme d'un guide en forme de trou oblong (17), afin de permettre de positionner de façon coulissante le goujon d'embrayage (12).

4. Embrayage selon la revendication 3, **caractérisé en ce que** le goujon d'embrayage (12) est relié à un goujon de palier de roulement (16) dans la zone de la première extrémité, ledit goujon s'étendant perpendiculairement à la direction axiale du goujon d'embrayage (12) et traversant le trou oblong (17).

5. Embrayage selon l'une quelconque des revendications 1 à 4, **caractérisé en ce que** la partie de palier de roulement (13) fait partie d'une transmission d'embrayage (18) pouvant notamment être actionnée à l'aide d'un levier à main (19) disposé de façon à pouvoir pivoter.

6. Embrayage selon la revendication 5, **caractérisé en ce que** la transmission d'embrayage (18) comporte deux balanciers (26, 27) pouvant pivoter autour d'axes (24, 25) parallèles, les deux balanciers (26, 27) recevant à une certaine distance par rapport à leurs axes de pivotement (24, 25), de façon à pouvoir pivoter, la partie de palier de roulement (13), les axes de pivotement (24, 25, 30, 31) des deux balanciers (26, 27) et de la partie de palier de roulement (13) étant disposés parallèlement.

7. Embrayage selon la revendication 6, **caractérisé en ce qu'**un balancier (26) parmi les deux balanciers (26, 27) est relié au levier à main (19) et forme notamment une unité de construction dotée du levier à main (19).

8. Embrayage selon l'une quelconque des revendications 6 à 7, **caractérisé en ce qu'**en sus du couplage articulé, lors de la transmission d'embrayage (18) à l'aide de la partie de palier de roulement (13) reçue par les balanciers (26, 27), de telle sorte qu'une force est introduite dans une première direction dans l'extension longitudinale de la partie de palier de roulement (13) par actionnement du levier à main (19), par le biais dudit premier balancier (26), un couplage articulé supplémentaire est prévu, de telle sorte qu'une force est introduite dans la même première direction dans la partie de palier de roulement (13) par actionnement du levier à main (19), par le biais de l'autre balancier (27).

9. Embrayage selon la revendication 8, **caractérisé en ce que** l'autre balancier (27) parmi les deux balanciers (26, 27) fait partie d'un élément de transmission (36), l'élément de transmission (36) comportant au moins deux montants ou bien deux montants (27, 37) et un étai (38) les reliant, le premier montant formant l'autre balancier (27) et l'autre montant (37) étant relié dans la zone de son extrémité opposée à la partie de palier de roulement (13) de façon à pouvoir pivoter avec une barre de liaison (39) formant le couplage supplémentaire, ladite barre étant reliée de façon à pouvoir pivoter avec le levier à main (19) à une certaine distance de son axe de pivotement (24).

10. Embrayage selon la revendication 9, **caractérisé en ce que** l'élément de transmission (36) prend la forme d'un U.

11. Embrayage selon la revendication 9 ou 10, **caractérisé en ce qu'**un support (20) est disposé dans le corps d'embrayage (2), dans lequel le premier balancier (26) formant une unité de construction avec le levier à main (19) est disposé de façon à pouvoir pivoter autour d'un axe horizontal (24), ainsi que dans lequel l'élément de transmission (36) est disposé de façon à pouvoir pivoter dans le support (20).

12. Embrayage selon l'une quelconque des revendications 6 à 11, **caractérisé en ce que** dans la position d'embrayage du goujon d'embrayage (12), les axes de palier de roulement (24, 30 ; 25, 31) du balancier (26 ; 27) respectif sont disposés pour l'essentiel selon un alignement vertical, notamment lorsque la partie de palier de roulement (13) est disposée en bas.

13. Embrayage selon l'une quelconque des revendications 6 à 12, **caractérisé en ce que** dans la position de non-embrayage du goujon d'embrayage (12), les axes de palier de roulement (24, 30 ; 25, 31) du balancier (26 ; 27) respectif sont disposés pour l'essentiel selon un alignement vertical, notamment lorsque la partie de palier de roulement (13) est disposée en haut.

14. Embrayage selon l'une quelconque des revendications 1 à 13, **caractérisé en ce que** dans la position de non-embrayage et/ou dans la position d'embrayage du goujon d'embrayage (12), le dispositif d'actionnement (14) se trouve dans une position surplombant le point mort, lors de l'appui contre une butée de limitation, notamment une butée de limitation (42) prévue pour le levier à main (19).

15. Embrayage selon l'une quelconque des revendications 1 à 14, **caractérisé en ce que** le corps d'embrayage (2) prend la forme d'une gueule d'embrayage avec une section de gueule (3) inférieure comportant une ouverture (10) servant à recevoir le goujon d'embrayage (12) dans la position d'embrayage lors du guidage axial du goujon d'embrayage (12) enfiché et avec une section de gueule (4) supérieure comportant une ouverture traversante (9) servant à recevoir le goujon d'embrayage (12) dans la position d'embrayage et dans la position de non-embrayage, lors du guidage axial du goujon d'embrayage (12).
